# EUROPÄISCHE PATENTANMELDUNG

(11) **EP 2 146 525 A1**
(43) Veröffentlichungstag der Anmeldung: **20.01.2010**
(21) Anmeldenummer: 09450131.9
(22) Anmeldetag: 16.07.2009
(51) Int. Cl.: H04W 4/02, H04L 29/08, G01C 21/34, G08G 1/09

(54) **Verfahren zur Personalisierung von TMC Diensten**

(30) Priorität: 17.07.2008 AT 11142008
(71) Anmelder: Österreichisches Forschungs Und Prüfzentrum Arsenal Gesselshaft m.b.H, 1210 Wien (AT)
(72) Erfinder: Linauer, Martin, Dipl.-Ing., 1030 Wien (AT); Reinthaler, Martin, Dipl.-Ing. (FH), 2084 Weitersfeld (AT)
(74) Vertreter: Wildhack & Jellinek

(57) **Zusammenfassung**

Die Erfindung betrifft ein Verfahren sowie ein System zur Informationsübermittlung und zur Darstellung nutzerbezogener Datensätze (41) in einem Fahrzeug (2), mit einem zentralen Server (1) mit Zugriff auf eine Vielzahl von ortsbezogenen Datensätzen (41), wobei dieser Server (1) mit einem Mobilfunknetz (15) in Verbindung steht.

Erfindungsgemäß ist vorgesehen, dass
im Fahrzeug (2) eine Anzeigeeinheit (23) mittels Radio-Funksignalen empfangene nutzerbezogene Datensätze (41) darstellt,
im Fahrzeug (2) ein Endstellen-Gerät (21) vorgesehen wird, welches eine Sendeantenne (24) zur Abgabe von Radio-Funksignalen umfasst,
die geographische Lage bzw. Position des Fahrzeugs (2) ermittelt und an den Server (1) übermittelt wird,
der Server (1) innerhalb einer Umgebung (42) um die ermittelte Position des Fahrzeugs (2) alle dem Nutzer ständig zum Abruf zur Verfügung stehenden nutzerbezogenen Datensätze (41) aus den verfügbaren, abgespeicherten, allgemeinen Datensätzen (40) ermittelt und über das Mobilfunknetz (15) an das Endstellen-Gerät (21) übermittelt,
die übermittelten und nutzerbezogenen Datensätze (41) in ein Radio-Funksignal transformiert und abgestrahlt werden, und
die Datensätze (41) des Radio-Funksignals decodiert dargestellt wird (Fig. 1).

## Beschreibung

Die Erfindung betrifft ein Verfahren zur Informationsübermittlung und zur Darstellung nutzerbezogener Datensätze in einem Fahrzeug gemäß dem Oberbegriff des Anspruch 1 sowie ein System zur Informationsübermittlung gemäß dem **Oberbegriff** des Anspruches 10.

Derartige Verfahren und Systeme werden im Bereich der digitalen Datenübertragung eingesetzt.

In modernen Satellitennavigationssystemen, wie z.B. GPS-Systemen, werden vermehrt Verkehrsinformationsanzeigeelemente aufgenommen. Aus diesem Grund wurde ein allgemein anerkannter Standard für die Vermittlung von Verkehrsdaten innerhalb eines Frequenzbandes spezifiziert, in welchem Verkehrsnachrichten an die einzelnen Endstellengeräte übermittelt werden können. Interfaces zum Empfang derartiger Nachrichten sind in den meisten modernen Navigationssystemen und KFZ-Radiogeräten enthalten. Ferner ist auch ein Netz von TMC-Serviceprovidern in den meisten europäischen Ländern, wie auch in den Vereinigten Staaten etabliert.

Die Aufgabe der Erfindung liegt darin, diese existierende Infrastruktur eines standardisierten TMC-Systems zu nutzen und dieses zusätzlich mit der Möglichkeit zu versehen, individuelle und situationsbezogene Daten zu übermitteln. Während andere Ansätze, wie z.B. TOM-TOM-traffic, mit Bluetooth oder Mobilfunk operieren, ist es die Aufgabe der gegenständlichen Erfindung, die bereits in den vorhandenen Endstellengeräten integrierte TMC-Architektur weiter zu nutzen, um die Umrüstung eines bereits bestehenden Satellitennavigationssystems auf individuelle und situationsbezogene Informationen zu ermöglichen.

Die Erfindung löst diese Problemstellung mit einem Verfahren mit den **Merkmalen** des **Anspruchs** 1 bzw. mit einem System mit den **Merkmalen** des **Anspruchs** 10.

Vorteilhaft ist, dass mit dem vorliegenden Verfahren individuelle Daten an Anzeigeeinheiten in Fahrzeugen übertragen und diese Daten im Fahrzeug zur Anzeige gebracht werden können. Nutzerbezogene Datensätze können von einer Vielzahl von unterschiedlichen Providern über ein gemeinsames Mobilfunknetz an eine Vielzahl von Fahrzeugen übermittelt werden. Das erfindungsgemäße Verfahren kann mit einer großen Anzahl von Endstellengeräten, insbesondere Satellitennavigationsgeräten, durchgeführt werden.

Dem Autofahrer bietet sich hierdurch die Möglichkeit, dass er nutzerbezogene Daten von einer Vielzahl unterschieldicher Provider wählen kann. Den Anbietern oder Providern derartiger Services bietet sich die Möglichkeit, kostenpflichtige Dienste anzubieten, sowie diese auch dann anbieten zu können, wenn sie nicht im Besitz einer Rundfunklizenz sind.

Mit den **Merkmalen** der **Ansprüche 2, 5 oder 10** kann eine Anpassung an unterschiedliche Endstellengeräte erfolgen.

Insbesondere wird die Beeinträchtigung von anderen terrestrischen Funksignalen, z.B. Rundfunkfrequenzen, weitestgehend vermieden.

Mit den **Merkmalen** der **Ansprüche 3 oder 4** werden auf einfache Art die Position des Fahrzeugs sowie die positionsrelevanten Datensätze für das Fahrzeug bestimmt.

Die **Merkmale** der **Ansprüche 6, 9 oder 15** ermöglichen eine übersichtliche Darstellung der übermittelten nutzerbezogenen Datensätze.

Ein Verfahren gemäß **Anspruch 7 oder 12** ermöglicht eine besonders effiziente zentrale Datenhaltung.

Ein Verfahren gemäß **Anspruch 8, 13 und/oder 14** ermöglicht das benutzerseitige Abonnieren unterschiedlicher Arten von Datensätzen.
Fig. 1 zeigt schematisch ein erfindungsgemäßes System.
Fig. 2 zeigt denjenigen Teil des Systems, welcher im Fahrzeug angeordnet ist.
Fig. 3a, 3b und 3c beschreiben unterschiedliche Arten der Auswahl und Anzeige von Datensätzen.

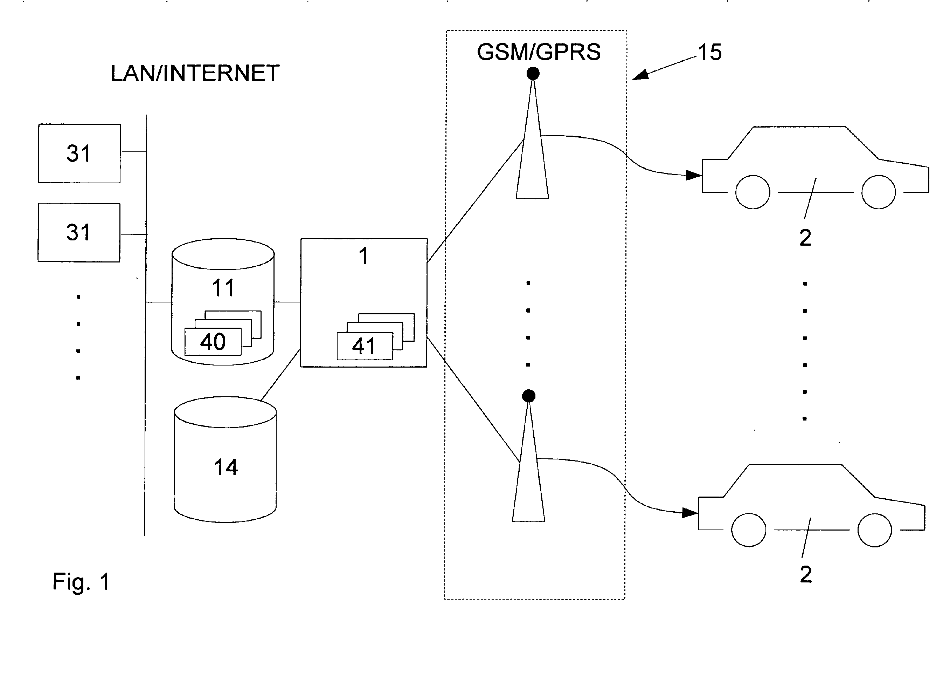

In Fig. 1 ist schematisch ein erfindungsgemäßes System zur Übermittlung von nutzerbezogenen Datensätzen 41 dargestellt. Jeder dieser nutzerbezogenen Datensätze weist einen Ortsbezug auf. Dies bedeutet, dass die Daten, welche in dem jeweiligen Datensatz abgespeichert sind, auf einen festen Ort bezogen sind. Dieser Ort wird üblicherweise durch seine geographischen Koordinaten, beispielsweise geographische Länge und Breite angegeben. Ferner können diesen Datensätzen 41 noch beliebige weitere Informationen hinzugefügt werden, beispielsweise ein Informationstext, Zahlen oder Symbole, welche die Art der Information kennzeichnen. Ein derartiger nutzerbezogener Datensatz kann sich beispielsweise auf ein Verkehrsereignis, wie Unfall oder Stau, beziehen. Ferner besteht auch die Möglichkeit, dass Infos betreffend bestimmte Dienstleistungen, insbesondere jene in der Nähe der jeweiligen Position des betreffenden Fahrzeugs, zu Werbungszwecken an das betreffende Fahrzeug 2 übermittelt werden.

Typischerweise werden derartige Datensätze von Verkehrsdienstanbietern sowie Werbungsprovidern angeboten. All diese Anbieter und Provider verfügen entsprechend der in Fig. 1 dargestellten Ausführungsform des erfindungsgemäßen Systems über einen Providerserver 31. Jeder der Providerserver 31 ist, beispielsweise über LAN oder Internet, mit einem Datenbankserver bzw. einer Datenbank 11 verbunden, welche die von den Providern bzw. deren Servern 31 zur Verfügung gestellten allgemeinen Datensätze 40 abspeichert und für eine allgemeine Abfrage zur Verfügung stellt. Diese Datenbank 11 ist an einen Server 1 angeschlossen, wobei dieser Server auf die in der Datenbank 11 gespeicherten Daten zugreifen kann. Insbesondere kann vorgesehen werden, dass die in der Datenbank 11 abgespeicherten allgemeinen Datensätze 40 in verschiedene Klassen 49 unterteilt werden bzw. unterteilt vorliegen. Eine derartige Unterteilung in Klassen 49 kann entweder nach sachlichen Gesichtspunkten, wie z.B. der Trennung von Verkehrsdaten und Werbung, oder aber auch zur Erleichterung der Abrechnung nach Providern erfolgen. So kann beispielsweise vorgesehen werden, dass die Daten eines der Anbieter grundsätzlich in einer anderen Klasse 49 abgespeichert werden als die Daten eines anderen Anbieters. Somit ist es möglich, dass durch Abfrage von Datensätzen 40 unterschiedlicher Provider, unterschiedlich detaillierte Informationen über bestimmte Ereignisse oder Angebote bezogen werden können.

Die Auswahl, welche Klassen 49 von Datensätzen 41 bezogen werden, hängt vom Benutzer ab. Um eine Zuordnung zwischen Benutzern und Klassen 49 von Datensätzen 40 zu erhalten, wird eine Nutzerdatenbank 14 eingerichtet. In dieser Nutzerdatenbank 14 ist eine Zuordnung zwischen Benutzern bzw. von diesen verwendeten Endstellen-Geräten 21 und den für das jeweilige Endstellen-Gerät 21 bzw. den zugehörigen Nutzer bestimmten Klassen 49 von Datensätzen 40 abgespeichert. Bevor ein Nutzer mittels seines Endstellen-Gerätes 21 auf die Datensätze 40 Zugriff erhält, kann eine Benutzeridentifikation vorgesehen sein. Nach Abschluss der Benutzeridentifikation erhält das jeweilige Endstellen-Gerät 21 die nutzerbezogenen Datensätze 40 laufend übermittelt. Besonders vorteilhaft, ist eine Identifikation von Benutzern, wenn für die Übermittlung von Datensätzen 40 an die einzelnen Benutzer eine Gebühr zu entrichten ist. Die Nutzerdatenbank 14 enthält somit Informationen darüber, welche Klassen 49 von Datensätzen 40 von welchem Nutzer bzw. von welchem Endstellen-Gerät 21 aus abrufbar sind.

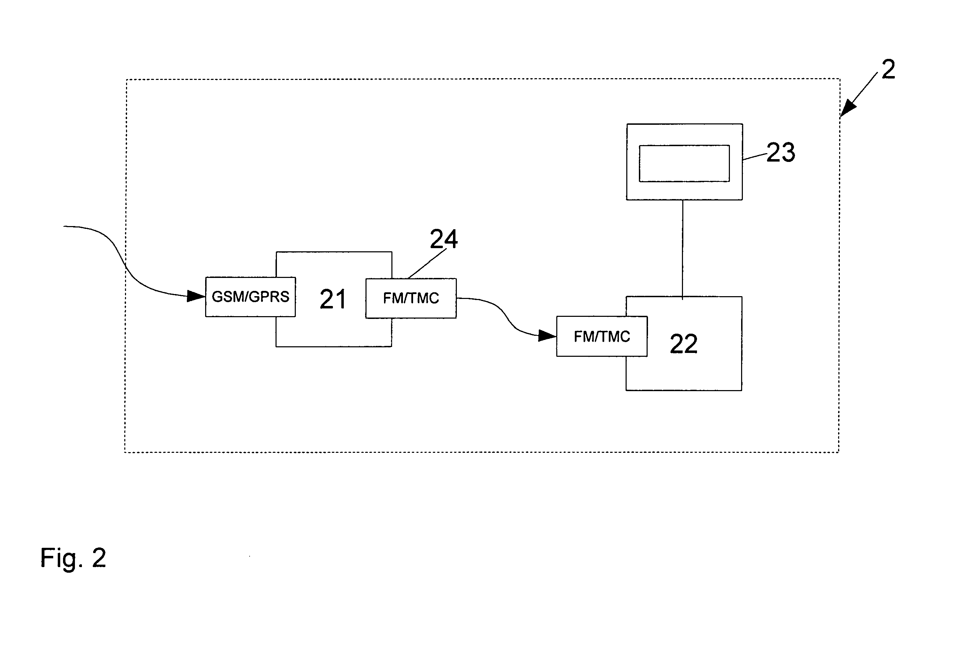

Die Verteilung der Datensätze 40 an die einzelnen Endstellen-Geräte 21 erfolgt, mittels eines Servers 1, welcher mit einem Mobilfunknetz 15 in Verbindung steht. Sollen von einem Fahrzeug 2 aus Datensätze 40 empfangen werden können, sind eine Anzeigeeinheit 23, sowie das Endstellen-Gerät 21 im Fahrzeug vorzusehen bzw. anzuordnen. Im Fahrzeug 2 wird eine Anzeigeeinheit 23 montiert, welche mittels Radio-Funksignalen empfangene nutzerbezogene Datensätze 41 darstellt. Das in Fig. 2 dargestellte Endstellen-Gerät 21 steht mit dem Mobilfunknetz 15 in Verbindung und weist ferner eine zusätzliche Sendeantenne 24 zur Abgabe von Radio-Funksignalen, insbesondere eines FM-Signals, auf. Somit können nutzerbezogene Datensätze 41, welche vom Server 1 mittels des Mobilfunknetzes 15 an die einzelnen Endstellen-Geräte 21 übermittelt worden sind, als Radio-Funksignal transformiert und abgestrahlt werden und über die Anzeigeeinheit 23, welche über eine zugehörige Empfangseinheit verfügt, dekodiert und dargestellt werden. Handelsübliche GPS-Geräte verfügen über eine derartige Funktionalität. Um die Übermittlung zu vereinfachen und vor allem eine Anpassung an die vorgegebene Empfangsfrequenz der Anzeigeeinheit 23 zu erreichen, wird für die Frequenz des abgestrahlten Radio-Funksignals ein Bereich zwischen 87,5 MHz und 108 MHz gewählt. Um zu vermeiden, dass die Sendeleistung des Endstellen-Gerätes 21 Empfangseinrichtungen im Umkreis des Fahrzeugs 2 beeinflusst, wird vorgesehen, dass die Sendeleistung der im Endstellen-Gerät 21 angeordneten Sendeantenne 24 auf einen Wert unter 10 mW eingeregelt wird.

Der Erfindung liegt die Idee zugrunde, dass bei Vorliegen ortsbezogener Datensätze 40 nur diejenigen Datensätze für einen in einem Fahrzeug 2 befindlichen Nutzer von Bedeutung sind, welche auf einen Ort in unmittelbarer Nähe bzw. innerhalb einer Umgebung 42 um die ermittelte Position des Fahrzeugs 2 bezogen sind bzw. deren Ortsbezug innerhalb dieser Umgebung 2 liegt. Bei handelsüblichen Anzeigeeinheiten 23 wird die geographische Lage bzw. Position des Fahrzeugs 2 bestimmt und eine Karte, insbesondere eine Straßenkarte, im Bereich des Fahrzeugs 2 dargestellt. In diesem Fall wird stets nur eine Umgebung 42 des Fahrzeugs 2 auf der Anzeigeeinheit 23 angezeigt, während die übrigen Teile der Karte nicht dargestellt werden. Bei der Durchführung des erfindungsgemäßen Verfahrens. Somit ist es für die Darstellung und Übermittlung von denjenigen Datensätzen ausreichend, welche innerhalb einer vorgegebenen Umgebung 2 rund um das Fahrzeug 2 ihren Ortsbezug haben.

Die Übermittlung aller vom Benutzer abonnierter bzw. diesem zur Verfügung stehender Daten erfordert äußerst hohe Datenraten und ist bei einer Vielzahl von Benutzern sehr aufwendig und erfordert hohe Bandbreiten des Mobilfunknetzes 15. Erfindungsgemäß ist vorgesehen, dass die geographische Lage bzw. Position des Fahrzeugs 2 ermittelt wird und, insbesondere mittels des Mobilfunknetzes 15, an den Server 1 übermittelt wird. Somit wählt der Server 1 nach Kenntnis der vom Benutzer abonnierten Klassen 49 von allgemeinen Datensätzen 40, sowie der ermittelten Position des Fahrzeugs 2 oder einer Umgebung 42 des Fahrzeugs 2, die für den einzelnen Benutzer relevanten nutzerbezogenen Datensätze 41. Diese nutzerbezogenen Datensätze werden über das Mobilfunknetz 15 an das Endstellen-Gerät 21 übermittelt.

Zur Ermittlung der geographischen Lage bzw. Position des Fahrzeugs 2 und/oder einer Umgebung 42 des Fahrzeugs bestehen folgende Möglichkeiten:

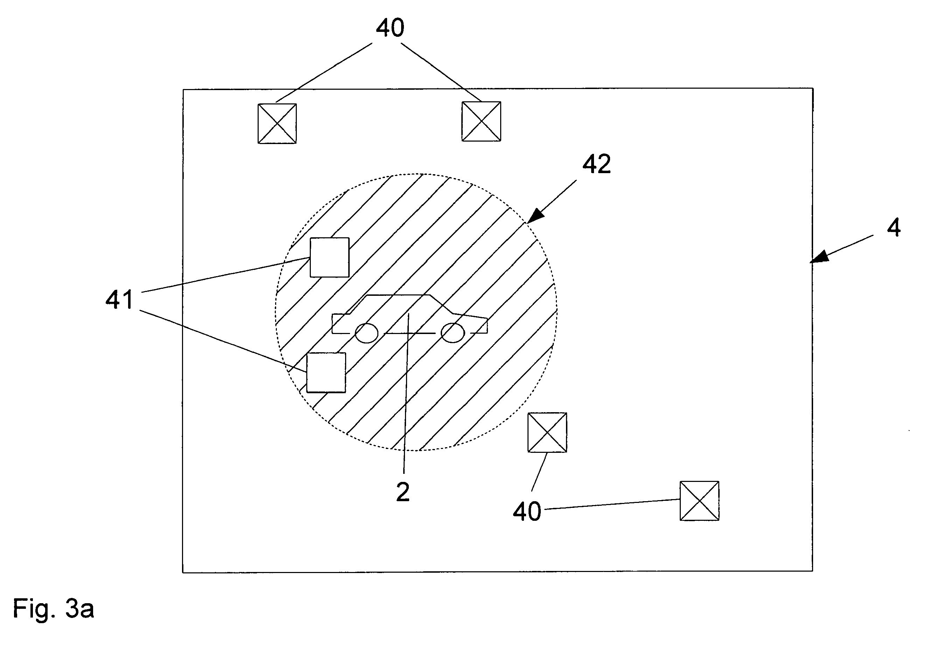

Fig. 3a zeigt eine Möglichkeit, bei Kenntnis der aktuellen Lage des Fahrzeugs 2, beispielsweise durch ein im Endstellen-Gerät 21 befindliches GPS-Gerät ermittelt, eine Umgebung 42 zu ermitteln. Hierbei wir ein vorgegebener Umkreis rund um das Fahrzeug 2 als Umgebung 42 des Fahrzeugs 2 bestimmt. Alle Datensätze 40, welche sich auf diese Umgebung 42 beziehen bzw. ohne Ortsbezug innerhalb dieser Umgebung 42 liegen, werden als nutzerbezogene Datensätze 41 bezeichnet. Weitere Datensätze 40, wie auf der Karte 4 dargestellt, welche zwar in der Datenbank 11 gespeichert sind und sich gegebenenfalls sogar in einer der vom Nutzer abonnierten Klassen 49 befinden, werden aufgrund des Umgebungskriteriums nicht zur Anzeige gebracht.

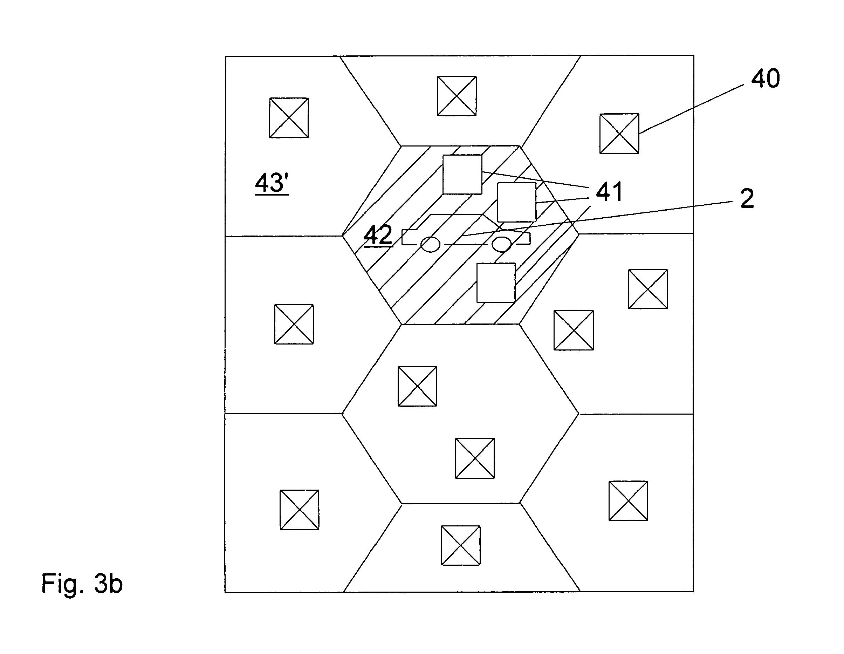

Eine weitere Möglichkeit besteht darin, wie in Fig. 3b dargestellt, nur jene Datensätze 41 zur Anzeige zu bringen, welche sich auf den Einzugsbereich derjenigen Mobilfunkzelle 43 beziehen, innerhalb der sich auch das Fahrzeug 2 befindet. Nachrichten 40, welche sich außerhalb der Mobilfunkzelle 43 liegt, werden nicht an das Fahrzeug 2 übermittelt, und daher nicht in diesem zur Anzeige gebracht.

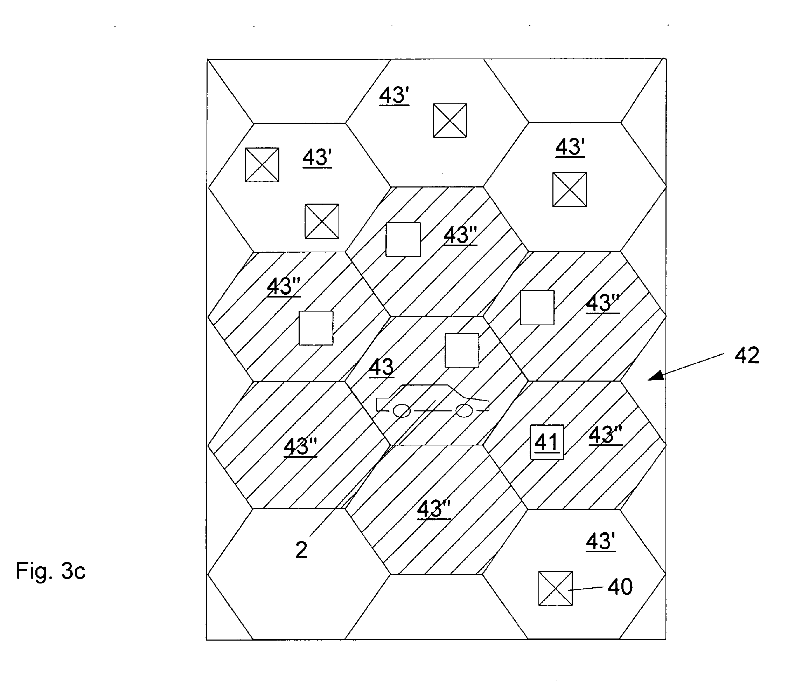

Eine Abwandlung des in Fig. 3b dargestellten Umgebungskriterium ist in Fig. 3c beschrieben. In diesem Fall wird als Umgebung 42 des Fahrzeugs 2 auch die Menge derjenigen Mobilfunkzellen des Mobilfunknetzes 15 gesehen, welche zur Mobilfunkzelle 43, in welcher sich das Fahrzeug 2 befindet, benachbart sind (43").

Weiteren Nachrichten 40, deren Ortsbezug sich außerhalb der Umgebung 42 befindet, werden weder an das Fahrzeug 2 übermittelt noch in diesem zur Anzeige gebracht.

## Patentansprüche

1. Verfahren zur Informationsübermittlung und zur Darstellung nutzerbezogener Datensätze (41) in einem Fahrzeug (2), mit einem zentralen Server (1) mit Zugriff auf eine Vielzahl von ortsbezogenen Datensätzen (41), wobei
a) dieser Server (1) mit einem Mobilfunknetz (15) in Verbindung steht,
**dadurch gekennzeichnet, dass**
b) im Fahrzeug (2) eine Anzeigeeinheit (23) montiert oder eingebaut wird, welche mittels Radio-Funksignalen empfangene nutzerbezogene Datensätze (41) darstellt,
c) im Fahrzeug (2) ein mit diesem Mobilfunknetz (15) in Verbindung stehendes Endstellen-Gerät (21) vorgesehen wird, welches eine Sendeantenne (24) zur Abgabe von Radio-Funksignalen, insbesondere eines FM-Signals, umfasst,
d) die geographische Lage bzw. Position des Fahrzeugs (2) ermittelt und an den Server
(1) übermittelt wird,
e) der Server (1) innerhalb einer Umgebung (42) um die ermittelte Position des Fahrzeugs (2) alle vorhandenen, vorgegebenen oder dem Nutzer ständig zum Abruf zur Verfügung stehenden oder von diesem ausgewählten, nutzerbezogenen Datensätze (41) aus den verfügbaren, abgespeicherten, allgemeinen Datensätzen (40) ermittelt und über das Mobilfunknetz (15) an das Endstellen-Gerät (21) übermittelt,
f) die übermittelten und nutzerbezogenen Datensätze (41) im Endstellen-Gerät (21) in ein Radio-Funksignal transformiert und abgestrahlt werden, und
g) die mittels der Anzeigeeinheit (23) aufgenommenen Datensätze (41) des Radio-Funksignals decodiert dargestellt wird.

2. Verfahren nach Anspruch 1,**dadurch gekennzeichnet, dass** die Frequenz des vom Endstellen-Gerät (21) an die Anzeigeeinheit (23) abgestrahlten Radio-Funksignals in einen Bereich zwischen 87,5 MHz und 108 MHz gewählt wird und/oder dass die Sendeleistung der im Endstellen-Gerät (21) angeordneten Sendeantenne (24) auf einen Wert unter 10 mW eingeregelt wird.

3. Verfahren nach einem der vorangehenden Ansprüche, **dadurch gekennzeichnet, dass** die geografische Lage bzw. Position des Fahrzeugs (2) festgestellt wird, indem diejenige Funk-Zelle (43) im Mobilfunknetz (15) ermittelt wird, über welche das im Fahrzeug (2) angeordnete Endstellen-Gerät (21) mit dem Server (1) in Funkverbindung steht und der von dieser Funk-Zelle (15) abgedeckte Bereich bzw. ein dieser Funk-Zelle (15) zugeordneter Bereich, insbesondere alle benachbarten Funk-Zellen (43"), als Umgebung (42) des Fahrzeugs (2) herangezogen wird, wobei nur Datensätze (41) ausgewählt und übertragen werden, deren Ortsbezug innerhalb der Umgebung (42) liegt.

4. Verfahren nach einem der Ansprüche 1 bis 3, **dadurch gekennzeichnet, dass** die geografische Lage bzw. Position des Fahrzeugs (2) durch das Endstellen-Gerät (21) im Fahrzeug (2) ermittelt und die Lage- bzw. Positionsinformation über das Mobilfunknetz (15) an den Server (1) übermittelt wird.

5. Verfahren nach einem der vorangehenden Ansprüche, **dadurch gekennzeichnet, dass** die nutzerbezogenen Datensätze (41) in ein FM-Signal umgewandelt und im TMC-Kanal eines FM-Frequenzbands zur Verfügung gestellt werden.

6. Verfahren nach einem der vorangehenden Ansprüche, **dadurch gekennzeichnet, dass** die Anzeigeeinheit (23) die geografische Lage bzw. Position des Fahrzeugs (2) bestimmt und eine Karte, insbesondere eine Straßenkarte, im Bereich des Fahrzeugs (2) darstellt, welcher insbesondere die Umgebung (42) des Fahrzeugs (2) umfasst, wobei alle übermittelten und empfangenen nutzerbezogenen Datensätze (41) der Karte überlagert dargestellt werden.

7. Verfahren nach einem der vorangehenden Ansprüche, **dadurch gekennzeichnet, dass** die allgemeinen Datensätze (40) in einer mit dem Server (1) verbundenen Datenbank (11) abgespeichert werden.

8. Verfahren nach einem der vorangehenden Ansprüche, **dadurch gekennzeichnet, dass** die allgemeinen Datensätze (40) in der Datenbank (11) in verschiedene Klassen (49) unterteilt vorliegen und einzelnen Endstellen-Geräten (21) ausschließlich eine oder mehrere Klassen von Datensätzen (41), insbesondere abhängig von einer vor der Übermittlung durchgeführten Benutzeridentifikation, zur Verfügung gestellt werden, wobei gegebenenfalls im Server (1) und/oder einer Nutzerdatenbank (14) eine Zuordnung zwischen Endstellen-Geräten (21) und den für das jeweilige Endstellen-Gerät (21) bestimmten Klassen (49) von Datensätzen (40) abgespeichert wird.

9. Verfahren nach einem der vorangehenden Ansprüche, **dadurch gekennzeichnet, dass** die Darstellung der Datensätze (41) graphisch durch die Anzeigeeinheit (23) und/oder akustisch durch einen an der Anzeigeeinheit (23) angeordnete Lautsprecher erfolgt.

10. System zur Informationsübermittlung und zur Darstellung nutzerbezogener Datensätze (41) in einem Fahrzeug (2), insbesondere zur Durchführung des Verfahrens nach einem der Ansprüche 1 bis 10, mit einem zentralen Server (1), mit Zugriff auf eine Vielzahl von ortsbezogenen Datensätzen (41),wobei
a) dieser Server (1) an ein Mobilfunknetz (15) angeschlossen ist,
**dadurch gekennzeichnet, dass**
b) im Fahrzeug (2) eine Anzeigeeinheit (23) montiert oder eingebaut ist, welche über Radiofunksignale empfangene nutzerbezogene Datensätze (41) darstellt,
c) im Fahrzeug (2) ein mit diesem Mobilfunknetz (15) in Verbindung stehendes Endstellen-Gerät (21) vorgesehen ist, welches eine Sendeantenne (24) zur Abgabe von Radio-Funksignalen, insbesondere eines FM-Signals, umfasst,
d) im Fahrzeug (2), insbesondere in der Anzeigeeinheit (23) oder im Endstellen-Gerät (21), eine Ermittlungseinheit zur Ermittlung der geographischen Lage bzw. Position des Fahrzeugs (2) angeordnet ist und eine Funkverbindung vom Endstellengerät (21) zum Server (1) zur Übermittlung der Positionsdaten besteht,
e) der Server (1) eine Auswahleinheit umfasst, welche aus der Vielzahl der ortsbezogenen Datensätze (41) nach Vorgabe des Nutzers Informationen auswählt und ferner eine Übermittlungseinheit zur Übermittlung der ausgewählten Daten über das Mobilfunknetz (15) an das Endstellen-Gerät (21) vorgesehen ist,
f) zwischen dem Endstellen-Gerät (21) und der Anzeigeeinheit (23) eine Funkstrecke für ein Radiofunksignal eingerichtet ist, über welche das Endstellen-Gerät (21) die ausgewählten und übermittelten Datensätze (41) an die Anzeigeeinheit (23) übermittelt.

11. System nach Anspruch 11, **dadurch gekennzeichnet, dass** die Frequenz des vom Endstellen-Gerät (21) an die Anzeigeeinheit (23) abgestrahlten Radiofunksignals im Bereich zwischen 87,5 und 108 MHz liegt, und/oder dass die Sendeleistung der im Endstellen-Gerät (21) angeordneten Sendeantenne unter 10 mW liegt.

12. System nach einem der Ansprüche 10 bis 11, **dadurch gekennzeichnet, dass** an den Server (1) eine Datenbank (11), in der die Datensätze (40) abgespeichert sind, angeschlossen ist.

13. System nach einem der Ansprüche 10 bis 12, **dadurch gekennzeichnet, dass** die Datensätze (40) in der Datenbank (11) in eine Vielzahl von Klassen (49) unterteilt vorliegen.

14. System nach einem der Ansprüche 10 bis 13, **dadurch gekennzeichnet, dass** an den Server (1) eine Nutzerdatenbank (14) angeschlossen ist, in welcher insbesondere Informationen darüber gespeichert sind, welche Klassen (49) von Datensätzen (40) von welchem Nutzer zugreifbar sind.

15. System nach einem der Ansprüche 10 bis 14, **dadurch gekennzeichnet, dass** die Anzeigeeinheit (23) über Einheiten zur graphischen und akustischen Ausgabe der in den Datensätzen (40) enthaltenen Informationen verfügt.
